(19) Europäisches Patentamt
European Patent Office
Office européen des brevets

(11) **EP 2 319 710 B1**

(12) **EUROPEAN PATENT SPECIFICATION**

(45) Date of publication and mention
of the grant of the patent:
**24.09.2014 Bulletin 2014/39**

(21) Application number: **09804946.3**

(22) Date of filing: **03.08.2009**

(51) Int Cl.:
**B60C 9/20** *(2006.01)* **B60C 9/18** *(2006.01)*
**B60C 9/22** *(2006.01)* **D07B 1/06** *(2006.01)*

(86) International application number:
**PCT/JP2009/063757**

(87) International publication number:
**WO 2010/016463 (11.02.2010 Gazette 2010/06)**

(54) **PNEUMATIC RADIAL TIRE**

RADIALLUFTREIFEN

PNEU À CARCASSE RADIALE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.08.2008 JP 2008202327**

(43) Date of publication of application:
**11.05.2011 Bulletin 2011/19**

(73) Proprietor: **Bridgestone Corporation
Tokyo 104-8340 (JP)**

(72) Inventor: **NAOI, Koichi
Kodaira-shi
Tokyo 187-0031 (JP)**

(74) Representative: **Oxley, Robin John George et al
Marks & Clerk LLP
90 Long Acre
London WC2E 9RA (GB)**

(56) References cited:
**JP-A- 6 073 674     JP-A- 2008 162 366**

**Description**

Technical Field

The present invention relates to a pneumatic radial tire (hereinafter, also simply referred to as "tire"). Particularly, the present invention relates to a pneumatic radial tire comprising a circumferential belt layer which consists of a plurality of corrugated or zigzag-shaped steel cords extending along the tire circumferential direction.

Background Art

Conventionally, pneumatic radial tires are provided with a circumferential belt in the tire circumferential direction as its belt layer, and it is known to apply corrugated or zigzag shaped cords to such a circumferential belt.
For instance, Patent Document 1 discloses a heavy-duty tire, particularly a planar tire used for trucks and buses, as well as off-the-road vehicles, which tire has a high inner pressure. Therein, a plurality of cords or filaments extending in a corrugated or zigzag shape along the equatorial plane of the tire are used as the reinforcing elements, and a plurality of ply layers in which these reinforcing elements are covered with rubber are used in place of belts consisting of cords arranged at an angle or in addition to such belts.

Related Art Documents

Patent Document

Patent Document 1: Japanese Unexamined Patent Application Publication No. H11-245617. Attention is also drawn to the disclosures of JP 2008-162366 and JP 60-73674.

Summary oft e Invention

Problems to be Solved by the Invention

However, since in the case of corrugated or zigzag shaped steel cords, the residual stress is a tensile stress at the inside of the bent portions of the steel cords, there has been a problem in that a tensile strain is likely to occur at these portions when the tire rolls. This will be a cause of decrease in durability of the steel cords.
In addition, in a tire having a circumferential belt which consists of corrugated or zigzag-shaped steel cords, the steel cord experiences a large stress at the bent portions due to its structure. Since the circumferential belt directly receives strains during rolling of the tire, it would be subjected to repeated torsional deformation at the bent portions during rolling of the tire. Thus, there is a concern for a decrease in the durability, such as occurrence of separation, caused by an increase in energy input associated with the future increase in the tire size and planarization of tires; therefore, it is an urgent task to improve the durability of circumferential belt.
In view of the above, the object of the present invention is to provide a pneumatic radial tire utilizing corrugated or zigzag-shaped steel cords for its circumferential belt, wherein the tire can prevent particularly the fatigue rupture of steel cords, which is a concern when energy input will be increased in the future and wherein durability of the circumferential belt is improved.

Means for Solving the Problem

In order to solve the above-described problems, the present inventor intensively studied to discover that the durability of a steel cord can be improved by controlling the residual stress at the bent portions of the corrugated or zigzag-shaped steel cord, thereby completing the present invention.
That is, the pneumatic radial tire of the present invention is a pneumatic radial tire which has, as a skeleton, a carcass extending in a toroidal shape between a left-and-right pair of bead portions, and has a belt layer and tread layer successively arranged onto said carcass at the outer part in the tire radial direction, wherein
said belt layer comprises at least one circumferential belt which consists of a plurality of corrugated or zigzag shaped steel cords extending along the tire circumferential direction, and
at least the relations represented by the following expressions:

$$5 * L2 \leq L1 \leq 0.5 * L2,$$

$$L2 \leq 0$$

(where, in the case where said residual stress is a tensile stress, the stress is a + value while, in the case where said residual stress is a compressive stress, the stress is a - value) are satisfied, when the steel cords of the circumferential belt are taken out, at the inside and the outside of bent portions of the steel cords which are taken out, letting the residual stress at the inside of bent portions of the filament of a sheath portion be L1 and the residual stress at the outside of bent portions of the filament of the sheath portion be L2.

In the pneumatic radial tire of the present invention, when the steel cords of the circumferential belt are taken out, the radius of curvature R at the bent portions of the steel cords which are taken out is preferably in the range from 18 mm to 125 mm, and said steel cords of the circumferential belt are preferably twisted cords which consist of filaments having a filament diameter in the range from 0.12 mm to 0.45 mm, said steel cords having a cord diameter in the range from 1.20 mm to 3.00 mm and having an initial elongation strain in the range from 0.3% to 3.0%. Further, in the pneumatic radial tire of the present invention, said belt layer preferably comprises one to four layers of said circumferential belts, and still further, said belt layer preferably comprises one to three layers of intersecting belt consisting of cords extending at an angle with respect to the tire circumferential direction.

Effects of the Invention

In the present invention, by having the above-described constitution, the fatigue rupture of the steel cords can be effectively prevented and a pneumatic radial tire in which the durability of the circumferential belt is improved can be attained.

Brief Description of the Drawings

Fig. 1 is a schematic view illustrating a corrugated steel cord.
Fig. 2 is a drawing explaining a stress direction σ22 which is determined in the present invention.
Fig. 3 is a graph illustrating a strain-load curve of the steel cord.
Fig. 4 is an enlarged cross-sectional view illustrating the neighborhood of the tread portion of one example of the pneumatic radial tire of the present invention.

Modes for Carrying out the Invention

A preferred embodiment of the present invention will be described in detail referring to the drawings.

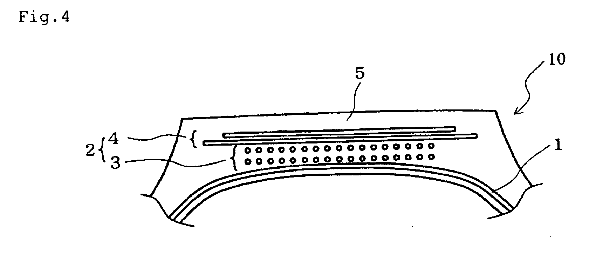

Fig. 4 is an enlarged cross-sectional view illustrating the neighborhood of the tread portion of one embodiment of the pneumatic tire of the present invention. The illustrated a pneumatic radial tire 10 of the present invention has a carcass 1 as the skeleton extending in a toroidal shape between a left-and-right pair of bead portions (not shown), and has a belt layer 2 and a tread layer 5 successively arranged thereonto at the outer part in the tire radial direction.
In the present invention, it is important that
the belt layer 2 comprises at least one layer of circumferential belt 3, and two layers thereof in the illustrated embodiment, which layer consists of a plurality of corrugated or zigzag-shaped steel cords extending in the tire circumferential direction, and
at least the relations represented by the following expressions:

$$-0.5 \leq L1 / L2 \leq 0.5,$$

$$L2 \leq 0$$

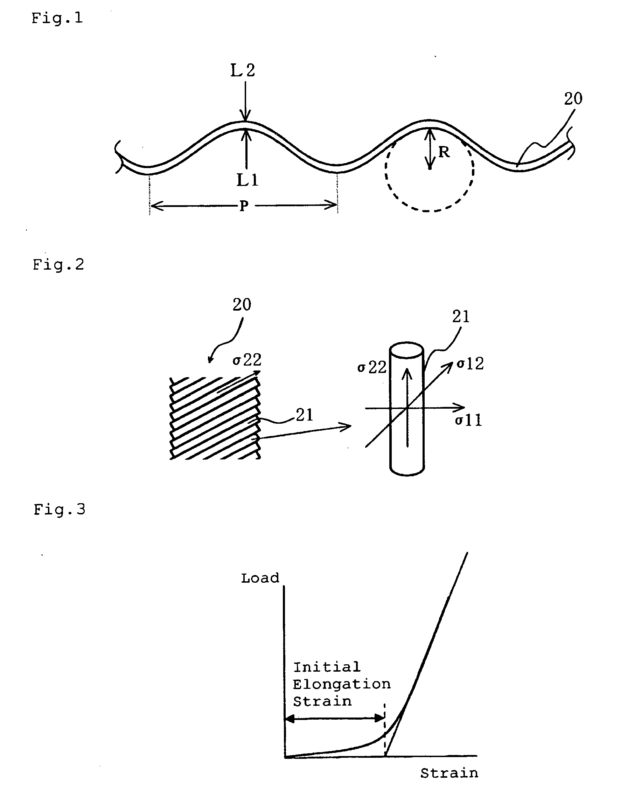

(where, in the case where said residual stress is a tensile stress, the stress is a + value while, in the case where said residual stress is a compressive stress, the stress is a - value) are satisfied, when the steel cords of the circumferential belt 3 are taken out, at the inside and the outside of bent portions of the steel cords which are taken out, letting the residual stress at the inside of bent portions of the filament of a sheath portion be L1 and the residual stress at the outside of bent portions of the filament of the sheath portion be L2. The positional relationship of a residual stress L1 at the inside and a residual stress L2 at the outside of bent portions of the filament is illustrated as Fig. 1.

As already described, bending strains become concentrated at the bent portions in a corrugated or zigzag-shaped steel cord and depending on an increase in energy input associated with the future increase in the tire size and the like, there is a concern that a fatigue rupture of the steel cord occurs originating at such bent portions. In order to prevent this, it is effective to shift as much as possible the residual stress L1 at the inside of bent portions of the filament which is on the + (tensile) side to the - (compressive) side. The shift of the residual stress L1 from the + (tensile) side to the - (compressive) side can be performed by a presetting which shifts a tensile residual stress to the compressive side by stretching the cord. The present invention enabled to prevent the occurrence of fatigue rapture by prescribing the residual stress.

As for the residual stress, the $\sigma 2$ component was measured by using an XRD equipment. As used herein, $\sigma 2$ refers to a stress applied in a direction perpendicular to the diametrical direction of the filament (sheath filament) 21 which constitutes the steel cord 20 (see Fig. 2). For the cord taken out from the tire, rubber and coatings were dissolved by a solvent, and the residual stress of the cord was measured by using an XRD equipment (collimator: 50 $\mu m\phi$, diffraction plane to be measured: $\alpha$-Fe (211), diffraction angle $2\theta$: about 156°, radiation source: Cr).

When L1/ L2 is less than -0.5 under L2 $\leq$ 0, the residual stress L1 shifts largely to the + direction, which will be a cause of decrease in the fatigability. On the other hand, when L1/ L2 exceeds 0.5, as will be described later, the steel cords no longer have a corrugated shape or zigzag shape and a preferable initial strain ranging 0. 3% to 3. 0% cannot be secured. In order to obtain a more favorable effect of the present invention, the relations represented by

$$0 \leq \text{L1/L2} \leq 0.5,$$

and

$$\text{L2} \leq -400$$

are desired to be satisfied.

In the present invention, it is preferred that, when the steel cords are taken out from the circumferential belt 3, the bent radius of curvature R of the steel cords is within the range from 18 mm to 125 mm. When the radius of curvature R is less than 18 mm, the relaxation of bending strain is insufficient. On the other hand, when the radius of curvature R is more than 125 mm, the necessary amount of steel for a tire cannot be secured and there arise many concerns for performances. As used herein, the radius of curvature R refers to a radius of curvature which is measured by approximating with a circular arc the bent portions of steel cord 20 processed into a corrugated or zigzag shape (see Fig. 1).

Further, it is preferred that the above-described steel cords 20 constituting the circumferential belt 3 be twist cords which consist of filaments having a filament diameter in the range from 0.12 mm to 0.45 mm, particularly from 0.15 mm to 0.36 mm. It is preferred that the steel cords have a cord diameter in the range from 1.20 mm to 3.00 mm, particularly from 1.20 mm to 2.00 mm, and that the initial elongation strain be in the range from 0.3% to 3.0%, particularly 0.9% to 2.0%. By using such steel cords, a more favorable cord durability can be secured.

When the initial elongation strain of the above-described steel cords exceeds 3.0%, the diameter growth by increased inner pressure becomes excessive, which makes the tread rubber on the tire surface to be in a stretched condition, thereby resulting in a deterioration of resistance to wear and anti-cut performance. On the other hand, in cases where the above-described initial elongation strain of the steel cords is less than 0.3%, the cords become fully stretched when the inner pressure of the tire is increased and at the time of diameter growth and the shape of the tire becomes abnormal due to buckling, thereby causing a deterioration of performance against partial wear. Here, the initial elongation strain of a steel cord is defined by a strain-load curve of the steel cord as shown in Fig. 3.

In the pneumatic radial tire of the present invention, the belt layer 2 preferably comprises one to four layers of the circumferential belt 3. When the number of layers in the circumferential belt 3 is five or more, the entire gauge would be too thick, thereby resulting in an increase in the weight and deterioration of the thermal durability.

Further, in the pneumatic radial tire of the present invention, the belt layer 2 preferably comprises one to three layers of intersecting belt 4 which consists of cords extending at an angle with respect to the tire circumferential direction. In cases where the intersecting belt 4 is not arranged, deformation of the tire in the lateral direction may not be prevented and performance against partial wear may be deteriorated. On the other hand, when four or more layers of intersecting belt 4 are arranged, the entire gauge would be too thick, which may result in an increase in the weight and deterioration of the thermal durability.

It is noted that the pneumatic radial tire of the present invention relates to the improvement of the steel cords embedded in the belt layer, and other structures or materials should not be particularly restricted, and known structures and materials may be employed as appropriate.

Examples

The pneumatic radial tire of the present invention will be explained concretely by way of examples thereof.

(Examples 1 to 7, Comparative Examples 1 to 3)

Each of test tires of tire size 495/45R22.5 was produced by using a steel cord (triple layer twist: 3+9+15 structure) whose residual stress ratio L1/ L2 was varied according to the Tables 1 and 2 below, and for each of the obtained test tires, the fatigue durability of the cords in the tire was evaluated.

<Fatigue Durability Test>

Using evaluation conditions: normal inner pressure, and 120% of normal load, and after 70000 km running at a speed of 60 km/ h, the fatigue durability of the tire was evaluated by performing an X-ray inspection. When fatigue durability was excellent, the evaluation was represented by ◎; when a slight cord breakages of the cords were observed but there were no problem in practical use, the evaluation was represented by ○; and when there was a cord breakage, the evaluation was represented by ×. The obtained results are shown in Tables 1 and 2 in combination.

[Table 1]

|  | Example 1 | Comparative Example 1 | Comparative Example 2 | Comparative Example 3 | Example 2 |
|---|---|---|---|---|---|
| L1/L2 | -0.2 | -0.7 | -1.0 | 0.7 | -0.3 |
| L2 (MPa) | -400 | -400 | -400 | -400 | -400 |
| Radius of Curvature R (mm) | 30 | 10 | 10 | 100 | 20 |
| Filament Diameter df (mm) | 0.23 | 0.23 | 0.23 | 0.50 | 0.23 |
| Cord Diameter (mm) | 1.4 | 1.4 | 1.4 | 3.1 | 1.4 |
| Initial Strain (%) | 2.0 | 2.0 | 4.0 | 1.0 | 2.0 |
| Fatigue Durability | ○ | × | × | × | ○ |

[Table 2]

|  | Example 3 | Example 4 | Example 5 | Example 6 | Example 7 |
|---|---|---|---|---|---|
| L1/L2 | -0.2 | 0.1 | 0.3 | 0.3 | 0.4 |
| L2 (MPa) | -400 | -400 | -400 | -400 | -400 |
| Radius of Curvature R (mm) | 30 | 50 | 100 | 30 | 40 |
| Filament Diameter df (mm) | 0.23 | 0.23 | 0.23 | 0.23 | 0.23 |
| Cord Diameter (mm) | 1.4 | 1.4 | 1.4 | 1.4 | 1.4 |
| Initial Strain (%) | 2 | 2 | 1.8 | 2.0 | 2.0 |
| Fatigue Durability | ○ | ◎ | ◎ | ◎ | ◎ |

As shown in the above Tables 1 and 2, it was confirmed that the durability of the steel cord was able to improve in the pneumatic tires of the Examples in which corrugated steel cords satisfying the conditions according to the present invention were used for the circumferential belt.

Description of Symbols

| | |
|---|---|
| 1 | carcass |
| 2 | belt layer |
| 3 | circumferential belt |
| 4 | intersecting belt |
| 5 | tread layer |
| 10 | pneumatic radial tire |
| 20 | steel cord |
| 21 | sheath filament |
| R | radius of curvature |
| L1 | residual stress at the inside of bent portions of the filament |
| L2 | residual stress at the outside of bent portions of the filament |

**Claims**

1. A pneumatic radial tire (10) which has as a skeleton a carcass (1) extending in a toroidal shape between a left-and-right pair of bead portions, and has a belt layer (2) and tread layer (5) successively arranged onto said carcass at the outer part in the tire radial direction, wherein
said belt layer comprises at least one circumferential belt (3) which consists of a plurality of corrugated or zigzag shaped steel cords (20) extending along the tire circumferential direction, and **characterised in that**:

   at least the relations represented by the following expressions:

$$-0.5L2 \leq L1 \leq 0.5L2,$$

$$L2 \leq 0$$

   (where, in the case where said residual stress is a tensile stress, the stress is a + value while, in the case where said residual stress is a compressive stress, the stress is a - value) are satisfied, when the steel cords of the circumferential belt are taken out, at the inside and the outside of bent portions of the steel cords which are taken out, letting the residual stress at the inside of bent portions of a filament (21) of a sheath portion be L1 and the residual stress at the outside of bent portions of the filament of the sheath portion be L2.

2. The pneumatic radial tire according to claim 1, wherein, when the steel cords of the circumferential belt are taken out, the radius of curvature R at the bent portions of the steel cords which are taken out is in the range from 18 mm to 125 mm.

3. The pneumatic radial tire according to claim 1, wherein said steel cords of the circumferential belt are twisted cords which consist of filaments having a filament diameter in the range from 0.12 mm to 0.45 mm, said steel cords having a cord diameter in the range from 1.20 mm to 3.00 mm and having an initial elongation strain in the range from 0.3% to 3.0%.

4. The pneumatic radial tire according to claim 1, wherein said belt layer comprises one to four layers of said circumferential belts.

5. The pneumatic radial tire according to claim 1, wherein said belt layer comprises one to three layers of intersecting belt consisting of cords extending at an angle with respect to the tire circumferential direction.

**Patentansprüche**

1. Radialluftreifen (10), der als ein Skelett eine Karkasse (1) aufweist, die sich in einer ringartigen Form zwischen einem linken und einem rechten Paar von Wulstabschnitten erstreckt, und der eine Gürtellage (2) und eine Laufflächenlage (5) aufweist, die aufeinanderfolgend auf der Karkasse im äußeren Teil in der radialen Reifenrichtung angeordnet sind, wobei
die Gürtellage mindestens einen Umfangsgürtel (3) aufweist, der aus einer Vielzahl von gewellten oder zickzackförmigen Stahlkorden (20) besteht, die sich längs der Reifenumfangsrichtung erstrecken, und **dadurch gekennzeichnet, dass**:

   mindestens die durch die folgenden Ausdrücke:

$$-0{,}5L2 \leq L1 \leq 0{,}5L2,$$

$$L2 \leq 0$$

   verkörperten Beziehungen (wobei in dem Fall, wo die Restspannung eine Zugspannung ist, die Spannung ein + Wert ist, während in dem Fall, wo die Restspannung eine Druckspannung ist, die Spannung ein - Wert ist) erfüllt werden, wenn die Stahlkorde des Umfangsgürtels herausgenommen werden, auf der Innenseite und der Außenseite der gebogenen Abschnitte der Stahlkorde, die herausgenommen werden, wobei die Restspannung auf der Innenseite der gebogenen Abschnitte eines Filaments (21) eines Mantelabschnittes bei L1 und die Restspannung auf der Außenseite der gebogenen Abschnitte des Filaments des Mantelabschnittes bei L2 belassen wird.

2. Radialluftreifen nach Anspruch 1, bei dem, wenn die Stahlkorde des Umfangsgürtels herausgenommen werden, der Krümmungsradius R an den gebogenen Abschnitten der Stahlkorde, die herausgenommen werden, im Bereich von 18 mm bis 125 mm liegt.

3. Radialluftreifen nach Anspruch 1, bei dem die Stahlkorde des Umfangsgürtels verzwimte Korde sind, die aus Filamenten mit einem Filamentdurchmesser im Bereich von 0,12 mm bis 0,45 mm bestehen, wobei die Stahlkorde einen Korddurchmesser im Bereich von 1,20 mm bis 3,00 mm und eine anfängliche Dehnungsverformung im Bereich von 0,3 % bis 3,0 % aufweisen.

4. Radialluftreifen nach Anspruch 1, bei dem die Gürtellage eine bis vier Lagen der Umfangsgürtel aufweist.

5. Radialluftreifen nach Anspruch 1, bei dem die Gürtellage eine bis drei Lagen des sich überschneidenden Gürtels aufweist, der aus Korden besteht, die sich unter einem Winkel mit Bezugnahme auf die Reifenumfangsrichtung erstrecken.

**Revendications**

1. Bandage pneumatique radial (10), comportant comme squelette une carcasse (1), s'étendant en une forme toroïdale entre une paire de parties de talon de gauche et de droite, et comportant une couche de ceinture (2) et une couche de bande de roulement (5), agencées successivement sur ladite carcasse au niveau de la partie externe dans la direction radiale du bandage pneumatique, dans lequel
ladite couche de ceinture comprend au moins une ceinture circonférentielle (3) composée de plusieurs câblés d'acier cannelés ou en zigzag (20), s'étendant le long de la direction circonférentielle du bandage pneumatique, et **caractérisé en ce que** :

   au moins les relations représentées par les expressions ci-dessous :

$$-0{,}5L2 \leq L1 \leq 0{,}5L2,$$

$$L2 \leq 0$$

(dans lesquelles, lorsque cette contrainte résiduelle est une contrainte de traction, la contrainte est une valeur +, tandis que, lorsque ladite contrainte résiduelle est une contrainte de compression, la contrainte est une valeur -), sont satisfaites, lorsque les câblés d'acier de la ceinture circonférentielle sont retirés, au niveau de l'intérieur et de l'extérieur de parties fléchies des câblés d'acier qui sont retirés, laissant la contrainte résiduelle au niveau de l'intérieur de parties fléchies d'un filament (21) d'une partie de gaine correspondre à L1, et laissant la contrainte résiduelle au niveau de l'extérieur de parties fléchies du filament de la partie de gaine correspondre à L2.

2. Bandage pneumatique radial selon la revendication 1, dans lequel, lorsque les câblés d'acier de la ceinture circonférentielle sont retirés, le rayon de courbure R au niveau des parties fléchies des câblés d'acier qui sont retirés, est compris dans l'intervalle allant de 18 mm à 125 mm.

3. Bandage pneumatique radial selon la revendication 1, dans lequel lesdits câblés d'acier de la ceinture circonférentielle sont des câblés torsadés composés de filaments ayant un diamètre de filament compris dans l'intervalle allant de 0,12 mm à 0,45 mm, lesdits câblés d'acier ayant un diamètre de câblé compris dans l'intervalle allant de 1,20 mm à 3,00 mm et présentant une limite apparente d'extension initiale comprise dans l'intervalle allant de 0,3% à 3,0%.

4. Bandage pneumatique radial selon la revendication 1, dans lequel ladite couche de ceinture comprend une à quatre couches desdites ceintures circonférentielles.

5. Bandage pneumatique radial selon la revendication 1, dans lequel ladite couche de ceinture comprend une à trois couches de ceinture à intersection composée des câblés s'étendant à un angle par rapport à la direction circonférentielle du bandage pneumatique.

Fig.1

Fig.2

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11245617 B
- JP 2008162366 A
- JP 60073674 A